# FASCICULE DE BREVET EUROPEEN

(11) **EP 1 798 888 B1**
(45) Date de publication et mention de la délivrance du brevet: **09.02.2011**
(21) Numéro de dépôt: 06126422.2
(22) Date de dépôt: 18.12.2006
(51) Int. Cl.: H04L 9/06

(54) **Protection de l'exécution d'un algorithme DES**
Schutz der Ausführung eines DES-Algorithmus
DES-algorithm execution protection

(30) Priorité: 19.12.2005 FR 0553931
(43) Date de publication de la demande: 20.06.2007
(73) Titulaire: ST MICROELECTRONICS S.A., 92120 Montrouge (FR)
(72) Inventeur: Teglia, Yannick, 13011, MARSEILLE (FR); Liardet, Pierre-Yvan, 13790, PEYNIER (FR); Pomet, Alain, 13790, ROUSSET (FR)
(74) Mandataire: de Beaumont, Michel

(56) Documents cités:
- EP-A- 1 052 801
- EP-A- 1 263 163
- DE-A1- 10 223 175
- FR-A- 2 831 739

## Description

### Domaine de l'invention

La présente invention concerne les algorithmes de chiffrement, en particulier de type DES (Data Encryption Standard), exécutés par des circuits intégrés. L'invention concerne plus particulièrement la protection de l'exécution d'un algorithme DES contre une attaque par analyse statistique de la consommation (Differential Power Analysis - DPA) du circuit qui exécute l'algorithme.

### Exposé de l'art antérieur

Les algorithmes DES ou triple DES sont des algorithmes de chiffrement symétriques (à clé secrète) utilisés en cryptographie, par exemple, pour chiffrer des données avant de les faire transiter sur des supports non protégés (Internet, liaison entre une carte à puce et un lecteur de carte, entre un processeur et une mémoire externe, etc.). Ces algorithmes sont décrits, par exemple, dans des normes FIPS PUB 46-2 (DES) et FIPS PUB 46-1, et des modes de fonctionnement (connus sous des dénominations Electronic Codebook - ECB, Cipher block Chaining - CBC, Cipher Feed Back - CFB, Output Feedback - OFB) sont décrits dans FIPS PUB 81.

Ces algorithmes effectuent un chiffrement par blocs (de 64 bits) en utilisant des clés (de 64 bits pour le DES et de 128 pour le triple DES) desquelles sont dérivées des sous-clés de 48 bits. Le déchiffrement est effectué à partir de la même clé (algorithme symétrique). Dans la description qui suit, on prendra pour exemple l'algorithme DES.

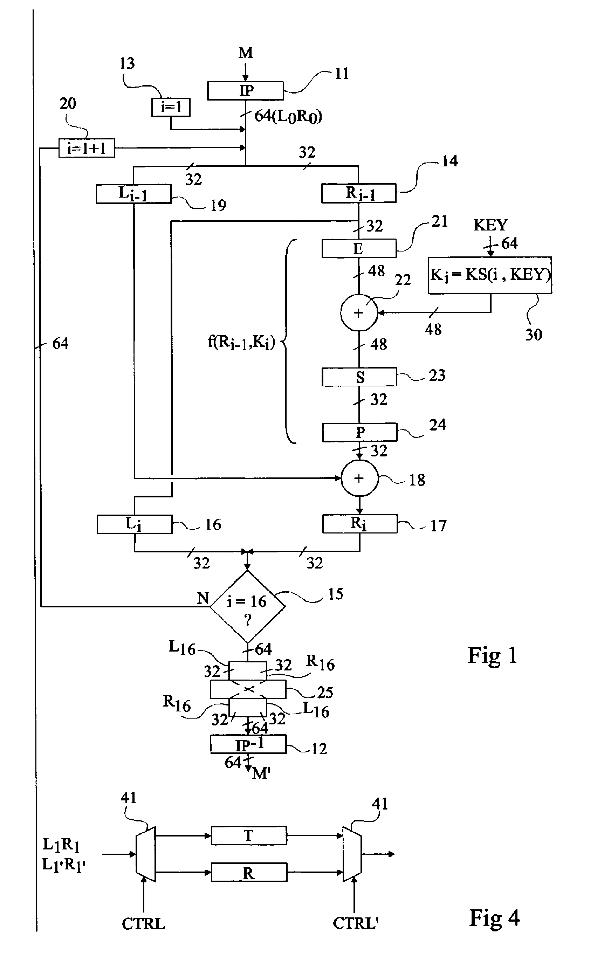

La figure 1 représente, de façon très schématique et sous forme de blocs, les étapes successives d'un algorithme DES auquel s'applique plus particulièrement la présente invention.

Un bloc de données à chiffrer (noté M) est soumis à une permutation initiale IP (bloc 11), puis à 16 itérations d'un calcul dépendant d'une clé, notée KEY, et enfin à une permutation inverse de la permutation initiale, notée IP⁻¹ (bloc 12).

Le calcul dépendant de la clé KEY peut s'exprimer avec les notations suivantes:
i, le rang de l'itération compris entre 1 et 16 (initialisation de i, bloc 13, i=1)
Kᵢ, un bloc de 48 bits extrait de la clé KEY de 64 bits (exemple du DES) utilisé dans la fonction de chiffrement de rang i ;
LᵢRᵢ, un bloc de données de 64 bits, résultant de l'application d'une fonction f à un bloc Rᵢ₋₁ (bloc 14) avec la sous-clé Kᵢ, constitué d'un mot ou sous-bloc Li des 32 bits de gauche et d'un mot ou sous-bloc Ri des 32 bits de droite ; et
f, une fonction du chiffrement.

Avec les notations ci-dessus, le résultat de la permutation initiale 11 est un bloc L₀R₀ et chaque itération ou tour de 1 à 16 applique :
Lᵢ (bloc 16) = Rᵢ₋₁ (bloc 14) ; et
Rᵢ (bloc 17) = Lᵢ₋₁ (+) f (Rᵢ₋₁, Kᵢ), où (+) désigne une addition bit à bit modulo 2 (bloc 18), c'est-à-dire un OU-Exclusif bit à bit, combinant le résultat f(Rᵢ₋₁, Ki) avec le mot Lᵢ₋₁ (bloc 19) .

Tant que le dernier tour n'est pas atteint (sortie N du bloc 15, i=16 ?), l'indice i est incrémenté (bloc 20, i=i+1) et on applique l'itération suivante. Le résultat de la dernière itération est un bloc L₁₆R₁₆ (sortie Y du bloc 15) qui, après avoir été transformé (bloc 25) en le bloc R₁₆L₁₆, est soumis à la permutation inverse IP⁻¹ 12 pour fournir un bloc chiffré noté M'.

La fonction f comporte trois étapes successives :
une première étape est une expansion, notée E (bloc 21), des 32 bits du sous-bloc Rᵢ₋₁ en 48 bits pour les combiner, par une fonction OU-Exclusif bit à bit 22 (+), avec les 48 bits de la sous-clé Ki de l'itération concernée. Cette expansion et combinaison fournit 8 groupes de six bits ;
une deuxième étape applique aux 48 bits issus de l'étape précédente une table de substitution, notée S (bloc 23) ou SBOX. Dans cette étape, chaque groupe de six bits issu de l'expansion précédente est transformé, par une de huit fonctions de substitution (fonctions primitives) de sorte à obtenir huit groupes de quatre bits, soit de nouveau 32 bits ;
une troisième étape est une permutation, notée P (bloc 24), des 32 bits issus de l'étape précédente. Cette permutation fournit un sous-bloc résultat de 32 bits correspondant au résultat de la fonction f.

Chaque sous-clé Kᵢ est obtenue (bloc 30) en appliquant une fonction primitive de clé KS à la clé KEY, la fonction KS dépendant du rang i de l'itération, soit: Kᵢ = KS(i,KEY).

Les détails des fonctions primitives KS, S et P, ainsi que de la fonction E sont décrits dans les normes citées ci-dessus.

Le déchiffrement s'effectue en soumettant un bloc à déchiffrer M' à la permutation IP, puis à des itérations de calcul identiques à celles du chiffrement, à la seule différence que les sous-clés sont utilisées dans un ordre inverse (on part de la sous-clé K₁₆ pour terminer par la sous-clé K₁). Le premier bloc issu de la permutation IP est le bloc L₁₆R₁₆ et le bloc issu de la dernière itération à soumettre à la permutation IP⁻¹ est le bloc R₀L₀. La permutation IP⁻¹ donne le bloc déchiffré M.

Une faiblesse des algorithmes de type DES apparaît lors d'attaques par analyse statistique de la consommation d'un circuit exécutant l'algorithme. De telles attaques consistent à faire des hypothèses sur la clé pour corréler un résultat intermédiaire à la consommation du circuit intégré. Ces attaques permettent de percer le secret constitué par la clé. En effet, la fonction f est connue (norme du DES) ainsi que la donnée d'entrée M (ou M') appliquée à l'algorithme. En supposant une partie de la sous-clé K par hypothèse, on obtient une partie des bits d'un résultat intermédiaire LᵢRᵢ. Si on obtient une corrélation entre cette partie des bits et la consommation du circuit à un instant donné, l'hypothèse sur la clé est vérifiée. Les moyens de calculs informatiques permettent aux pirates d'effectuer des hypothèses en nombre suffisant, et ainsi de pirater le secret du circuit (la clé).

La clé est généralement stockée dans une zone sécurisée du circuit, par exemple, dans une phase de personnalisation des circuits intégrés. Son chargement dans la cellule d'exécution de l'algorithme s'effectue de façon protégée, par exemple, en appliquant les méthodes décrites dans les brevets FR-A-2802668 et FR-A-2802669.

Une première solution connue, pour tenter de protéger un secret manipulé par un algorithme DES, est de masquer l'exécution par l'introduction de nombres aléatoires dans les itérations. Cette solution présente l'inconvénient de nécessiter une modification de l'algorithme lui-même.

Une deuxième solution connue consiste à masquer l'exécution de l'algorithme avec la clé secrète en la faisant s'exécuter parmi plusieurs exécutions (de l'ordre d'une dizaine) utilisant de fausses clés. Ces clés sont stockées à demeure dans une mémoire non volatile associée au processeur d'exécution de l'algorithme ou directement câblées dans le circuit. La vrai clé est généralement écrite lors de la personnalisation du circuit (par exemple, de la carte à puce) par une personne différente que le fabriquant du circuit, dans une zone généralement inaccessible (zone sécurisée du circuit). Ainsi, un pirate ne peut pas savoir, lorsqu'une hypothèse sur la clé se vérifie, si c'est la bonne clé ou non qui a été utilisée. Un inconvénient de cette solution est que, pour préserver le masquage, il est nécessaire de protéger toutes les clés (les fausses comme les vraies) lors de leur chargement dans la cellule d'exécution de l'algorithme. Cela prend du temps et allonge, de façon incompatible avec la manipulation rapide souhaitée des données, l'exécution de cet algorithme. Un autre inconvénient de cette solution est qu'elle n'apporte que du bruit blanc, donc aisément filtrable par le pirate. Une telle solution est décrite, par exemple par le document FR-A-2 831 739.

Le document DE 102 23 175 décrit une exécution en parallèle de l'algorithme DES avec plusieurs clés parmi lesquelles la clé correcte de façon à masquer l'exécution contre une attaque DPA. Comme pour la solution précédente, il faut protéger toutes les clés lors de leur chargement dans la cellule d'exécution de l'algorithme afin de préserver le masquage.

### Résumé de l'invention

La présente invention vise à améliorer la sécurité des algorithmes de chiffrement, en particulier de type DES, contre des attaques par analyse statistique de la consommation d'un circuit intégré qui exécute cet algorithme.

L'invention vise notamment à proposer une solution compatible avec la rapidité recherchée pour les chiffrements et déchiffrements des données.

L'invention vise également à proposer une solution ne nécessitant pas de modifier l'algorithme lui-même et qui soit ainsi compatible avec des cellules d'exécution classiques de l'algorithme DES.

L'invention vise également à éviter qu'il soit nécessaire de pré-stocker des fausses clés.

Pour atteindre tout ou partie de ces objets ainsi que d'autres, la présente invention prévoit un procédé de protection d'une exécution, par un circuit intégré, d'un algorithme de chiffrement et/ou de déchiffrement prenant en compte une donnée et au moins une clé valide et effectuant plusieurs itérations d'un même calcul, comportant au moins une exécution d'une itération avec la clé valide entre plusieurs exécutions de la même itération avec des clés invalides obtenues en appliquant au moins une fonction, non linéaire et à sens unique, à ladite clé valide.

Selon un mode de mise en oeuvre de la présente invention, ladite fonction est une fonction de condensat suivie ou précédée d'une fonction d'expansion.

Selon un mode de mise en oeuvre de la présente invention, la position de l'exécution avec la clé valide parmi la pluralité d'exécutions est sélectionnée aléatoirement.

Selon un mode de mise en oeuvre de la présente invention, l'algorithme est le DES, les clés invalides étant des sous-clés utilisées exclusivement pour les première et dernière itérations.

La présente invention prévoit également un processeur d'exécution d'un algorithme de chiffrement comportant un registre temporaire au moins de même taille qu'un registre de stockage de résultats intermédiaires de l'algorithme pour contenir les résultats intermédiaires de l'itération avec la clé valide pendant les itérations avec les clés invalides.

La présente invention prévoit également une carte à puce.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment, représente de façon très schématique et sous forme de blocs, un exemple classique d'exécution d'un algorithme DES auquel s'applique la présente invention ;
la figure 2 illustre, de façon très schématique et sous forme de blocs, un mode de mise en oeuvre du procédé de protection selon la présente invention ;
la figure 3 illustre partiellement une variante du procédé de la figure 2 ;
la figure 4 représente, de façon partielle et fonctionnelle, un exemple d'utilisation de registre d'un circuit intégré pour la mise en oeuvre de l'invention ;
la figure 5 représente, de façon très schématique, une carte à puce à laquelle s'applique par exemple, l'invention ; et
la figure 6 représente, de façon partielle et schématique, un autre exemple d'application de la présente invention.

De mêmes références désignent de mêmes éléments aux différentes figures. Pour des raisons de clarté, seuls les étapes et éléments qui sont utiles à la compréhension de l'invention ont été représentés aux figures et seront décrits par la suite. En particulier, les détails structurels d'un circuit intégré susceptible d'exécuter un algorithme DES ou analogue n'ont pas été illustrés, l'invention étant compatible avec les cellules matérielles exécutant classiquement les algorithmes de type DES.

### Description détaillée

Une caractéristique d'un aspect de la présente invention est de masquer l'exécution de l'algorithme de chiffrement en exécutant cet algorithme plusieurs fois avec de fausses clés, masquant ainsi le chiffrement avec la vraie clé. Une autre caractéristique de cet aspect de l'invention est que les fausses clés ne sont pas obtenues par des masques prédéterminés, mais en appliquant une fonction non linéaire et à sens unique à la vrai clé ou sous-clé. Ainsi, une seule clé doit être stockée de façon sécurisée dans le circuit intégré.

De préférence, notamment dans le cas du DES, les fausses exécutions se limitent aux premières et dernières itérations de l'algorithme qui sont les itérations considérées comme les plus sensibles aux attaques par analyse statistique de la consommation (DPA).

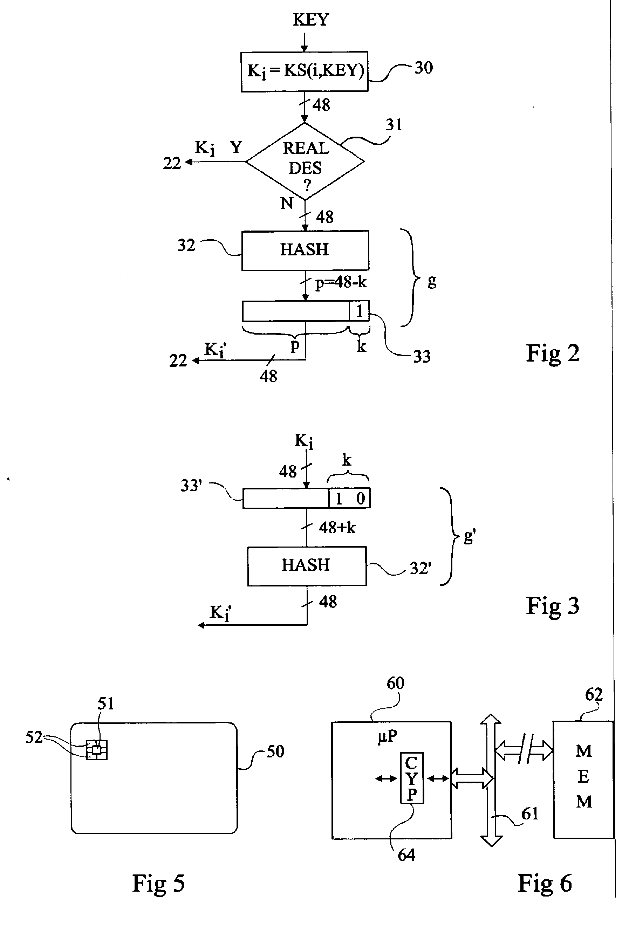

La figure 2 illustre, par un organigramme schématique, un mode de mise en oeuvre du procédé de protection selon la présente invention. L'invention ne touche que la génération de la sous-clé (entrée de la combinaison 22 en figure 1), sans modifier le reste de l'exécution de l'algorithme DES et est ainsi compatible avec les cellules classiques.

Selon le mode de mise en oeuvre de la figure 2, à chaque génération d'une sous-clé Ki par la fonction KS (bloc 30) classique, le programme décide (par exemple, de façon aléatoire) si l'exécution courante concerne une fausse exécution ou la bonne (test 31, REAL DES ?). Dans l'affirmative (sortie Y du bloc 31), la clé Ki générée par le bloc 30 est fournie en entrée de l'additionneur 22 pour être combinée avec le résultat de l'expansion 21 (figure 1). Dans le cas contraire (sortie N du test 31), on applique une fonction à sens unique à la clé Ki générée. Cette fonction, notée g en figure 2, est choisie pour être à sens unique, c'est-à-dire que, connaissant la fonction elle-même et le résultat qu'elle fournit, il n'est pas possible de remonter à la donnée d'entrée (la sous-clé Kᵢ). De plus, il s'agit d'une fonction non linéaire, c'est-à-dire qu'une combinaison de l'application de la fonction à deux opérandes (par exemple, g(A) + g(B)) donne un résultat différent de l'application de la fonction à la combinaison des deux opérandes (g(A+B)).

Selon un exemple de mise en oeuvre préférée, la fonction g met en oeuvre une fonction de condensat (bloc 32, HASH), par exemple de type ND5, SHA-1, RIPEMD160, etc. Le résultat de cette fonction de condensat est un nombre p de bits inférieur au nombre 48 de bits de la sous-clé Kᵢ. Ce résultat est donc complété par un nombre k de bits dans un état prédéterminé (par exemple, 1) comme cela est illustré par le bloc 33 en figure 2. Le résultat du bloc 33 fournit une fausse clé Ki' envoyée vers l'additionneur 22.

La figure 3 illustre partiellement une variante de la fonction g dans laquelle la fonction de condensat 32' est appliquée après expansion de la sous-clé Ki par ajout de k bits dans un état prédéterminé (bloc 33'). Le résultat Ki' est alors fourni par la fonction de condensat qui ramène le nombre de bits à 48.

La mise en oeuvre de la fonction g ou g' de l'invention s'effectue, de préférence, uniquement aux premières et dernières itérations de l'algorithme DES. Le nombre de "fausses" exécutions, de préférence compris entre 2 et quelques dizaines, dépend du temps disponible et est donc lié à l'application. Ce nombre peut être variable d'une exécution à l'autre de l'algorithme DES.

Une fois le premier tour passé (une fois que toutes les fausses sous-clés et la vraie ont été jouées pour le premier tour), on poursuit l'exécution de l'algorithme DES avec le résultat intermédiaire L₁R₁ obtenu avec la bonne première sous-clé.

La figure 4 représente un exemple de circuit fonctionnel utilisable pour la mise en oeuvre de l'invention. On suppose que les résultats intermédiaires LᵢRᵢ de l'exécution normale sont stockés dans un registre R. On prévoit alors un registre supplémentaire T de même taille pour stocker ces résultats intermédiaires lorsqu'une fausse clé est manipulée. La sélection entre le registre T et le registre R est effectuée par un sélecteur 41 commandé par un signal CTRL dépendant du résultat du test 31. De même, un sélecteur 41' commandé par un signal CTRL' permet de lire soit le registre R soit le registre T. Les signaux CTRL et CTRL' sont, par exemple, fournis par l'unité centrale de traitement du circuit. Les sélections en écriture et lecture des registres pourront également être logicielles.

Avant l'exécution d'une première itération (vraie ou fausse), les résultats intermédiaires contenus dans le registre R sont copiés dans le registre T. Dans le cas où le test 31 (figure 2) conduit à l'utilisation de la vraie clé K₁ de premier tour, on stocke alors le résultat obtenu L₁R₁ à la fin de cette "vraie" itération dans le registre temporaire T. Puis, on copie le contenu du registre T dans le registre R.

Dans le cas où le test 31 conduit à l'utilisation d'une fausse clé de premier tour K_{1'}, le résultat L_{1'}R_{1'} de ce premier tour est stocké dans le registre R. A chaque fin de chaque fausse itération, on copie le contenu du registre T dans le registre R pour, s'il s'agit de la dernière fausse exécution, retrouver le cheminement correct de l'algorithme DES.

De préférence, avant chaque fausse exécution, on affecte également au préalable le contenu du registre R à celui du registre T (le registre R contient toujours le bon résultat en fin de tour) afin de ne pas rendre détectable l'exécution avec la vraie sous-clé.

Une fois que toutes les fausses sous-clés et la vraie ont été jouées, l'exécution se poursuit par la deuxième itération du DES, de préférence sans masquage, en reprenant le contenu du registre R qui est L₁R₁.

Le même fonctionnement est reproduit, de préférence, pour la dernière itération du DES (clés K₁₆ et K_{16'}).

Dans une application de l'invention à d'autres algorithmes symétriques, les fausses clés sont, de préférence, jouées sur les itérations considérées comme les plus sensibles du point de vue de la sécurité.

Un avantage de la présente invention est que les corrélations sont créées sur des fausses sous-clés et limitent l'information sur la vraie clé.

Un autre avantage de la présente invention est que la connaissance de la fonction g de détermination des fausses clés ne permet pas de retrouver la clé Ki à partir de la clé Ki'. De préférence, on cherchera toutefois à maintenir secrète la fonction g.

Un autre avantage de l'invention est qu'elle ne nécessite aucune modification de la cellule d'exécution de l'algorithme DES, seule une manipulation de registres est requise.

Un autre avantage de la présente invention est qu'on évite l'introduction d'un bruit blanc, ce qui rend plus difficile les détections par un éventuel pirate.

La figure 5 représente, de façon très schématique, une carte à puce 50 du type auquel s'applique par exemple la présente invention. Une telle carte est le plus souvent constituée d'un support en matière plastique sur ou dans lequel est rapportée une puce de circuit intégré 51 associée à des contacts 52 de communication avec un terminal et/ou à des éléments (non représentés) d'émission-réception radiofréquence pour une communication sans contact. Le circuit intégré 51 comporte une fonction de chiffrement et de déchiffrement (par exemple de type DES ou triple DES) pour chiffrer des échanges avec un lecteur (non représenté). Au moins une sous-clé fournie à cette fonction est traitée par le procédé de l'invention.

La figure 6 représente, de façon très schématique et sous forme de blocs, un autre exemple d'application de l'invention. Un microprocesseur (60) communique par une liaison - par exemple un bus 61 ou toute autre liaison utilisant le cas échéant plusieurs supports (liaison à sans fil, internet, etc.) - avec un élément de stockage (par exemple, une mémoire 62) pour y stocker des données chiffrées par un algorithme. Le microprocesseur comporte pour cela une fonction (bloc 64, CYP) de chiffrement (logiciel et/ou matériel) et déchiffrement pour traiter tout ou partie des données à stocker. Au moins une sous-clé fournie à la fonction 64 est traitée par le procédé de l'invention.

Plus généralement, l'invention s'applique à tout circuit utilisant un algorithme de chiffrement.

Bien entendu, la présente invention est susceptible de diverses variantes et modifications qui apparaîtront à l'homme de l'art. En particulier, la mise en oeuvre pratique de l'invention, que ce soit avec des moyens matériels ou logiciels, est à la portée de l'homme du métier à partir des indications fonctionnelles données ci-dessus. De préférence, la fonction g est exécutée de façon matérielle, ce qui la rend plus efficace.

De plus, la fonction de condensat à utiliser pour générer les fausses clés peut être choisie en fonction des fonctions généralement disponibles dans le circuit intégré à protéger.

En outre, bien que l'invention ait été décrite en relation avec un masquage préféré des première et dernière itérations de l'algorithme DES, on pourra choisir de mettre en oeuvre les fausses clés à d'autres itérations et dans d'autres algorithmes symétriques. Enfin, le même type de protection peut être effectué côté déchiffrement dans la mesure où la clé secrète est également utilisée.

## Revendications

1. Procédé de protection d'une exécution, par un circuit intégré, d'un algorithme de chiffrement symétrique et/ou de déchiffrement prenant en compte une donnée et au moins une clé valide et effectuant plusieurs itérations d'un même calcul, **caractérisé en ce qu'**il comporte au moins une exécution d'une itération avec la clé valide (Kᵢ) suivie du stockage du résultat intermédiaire de l'algorithme avec ladite clé valide (Kᵢ) entre (pendant) plusieurs exécutions de la même itération avec des clés invalides (Kᵢ'), avant de reprendre le chemin correct de l'algorithme en utilisant le résultat intermédiaire stocké, lesdites clés invalides étant obtenues en appliquant au moins une fonction, non linéaire et à sens unique (32, 33 ; 32', 33') à ladite clé valide et ; lesdites clés invalides n'étant pas pré-stockées.

2. Procédé selon la revendication 1, dans lequel ladite fonction (g) est une fonction de condensat (32, 32') suivie ou précédée d'une fonction d'expansion (33, 33').

3. Procédé selon l'une quelconque des revendications 1 et 2, dans lequel la position de l'exécution avec la clé valide (Kᵢ) parmi la pluralité d'exécutions est sélectionnée aléatoirement.

4. Procédé selon l'une quelconque des revendications 1 à 3, dans lequel l'algorithme est le DES, les clés invalides (Kᵢ') étant des sous-clés utilisées exclusivement pour les première et dernière itérations.

5. Processeur d'exécution d'un algorithme de chiffrement pour mettre en oeuvre le procédé selon l'une quelconque des revendications 1 à 4, **caractérisé en ce qu'**il comporte un registre temporaire (T) au moins de même taille qu'un registre (R) de stockage de résultats intermédiaires de l'algorithme pour contenir les résultats intermédiaires de l'itération avec la clé valide (Kᵢ) pendant les itérations avec les clés invalides (Kᵢ').

6. Carte à puce (50), comportant des moyens pour mettre en oeuvre le procédé selon l'une quelconque des revendications 1 à 4.

## Claims

1. A method for protecting an execution, by an integrated circuit, of a symmetrical ciphering and/or deciphering algorithm taking into account data and at least one valid key and performing several iterations of a same calculation, **characterized in that** it comprises at least one execution of an iteration with the valid key (Kᵢ) and then storing the intermediate result of the algorithm with said valid key (kᵢ) between (during) several executions of the same iteration with invalid keys (Kᵢ'), before taking back the correct path of the algorithm by using the stored intermediate result, said valid keys being obtained by applying at least one non-linear one-way function (32, 33; 32', 33') to said valid key, said invalid keys not being pre-stored.

2. The method of claim 1, wherein said function (g) is a hash function (32, 32') followed or preceded by an expansion function (33, 33').

3. The method of claim 1 or 2, wherein the position of the execution with the valid key (Kᵢ) among the plurality of executions is randomly selected.

4. The method of any of claims 1 to 3, wherein the algorithm is the DES, the invalid keys (Kᵢ') being sub-keys used exclusively for the first and last iterations.

5. A processor of execution of a ciphering algorithm for implementing the method of any of claims 1 to 4, comprising a temporary register (T) at least of same size as a register (R) of storage of intermediary results of the algorithm for containing the intermediary results of the iteration with the valid key (Kᵢ) during the iterations with the invalid keys (Kᵢ').

6. A smart card (50), comprising means for implementing the method of any of claims 1 to 4.

## Patentansprüche

1. Ein Verfahren zum Schützen einer Ausführung durch eine integrierte Schaltung, von einem symmetrischen Chiffrier- oder Dechiffrier-Algorithmus, der Daten und wenigstens einen gültigen Schlüssel berücksichtigt und mehrere Iterationen von einer gleichen Berechnung ausführt, **gekennzeichnet dadurch dass** es aufweist: wenigstens eine Ausführung von einer Iteration mit dem gültigen Schlüssel (Kᵢ) und dann Speichern des Zwischenergebnisses von dem Algorithmus mit dem gültigen Schlüssel (Kᵢ) zwischen (während) mehrerer Ausführungen von der gleichen Iteration mit ungültigen Schlüsseln (Kᵢ'), bevor der korrekte Pfad mit dem Algorithmus wiederaufgenommen wird durch Nutzen des gespeicherten Zwischenergebnisses, wobei die gültigen Schlüssel erhalten werden durch Anwenden wenigstens einer nicht-linearen Einweg-Funktion (32, 33; 32', 33') auf den gültigen Schlüssel, wobei die ungültigen Schlüssel nicht vorgespeichert sind.

2. Verfahren nach Anspruch 1, wobei die Funktion (g) eine Hash-Funktion (32, 32') ist und zwar, gefolgt von einer Erweiterungsfunktion oder nach einer vorausgehenden Erweiterungsfunktion (33, 33').

3. Verfahren nach Anspruch 1 oder 2, wobei die Position von der Ausführung mit dem gültigen Schlüssel (Kᵢ) aus der Vielzahl von Ausführungen zufällig gewählt wird.

4. Verfahren nach irgendeinem der Ansprüche 1 bis 3, wobei der Algorithmus der DES ist, die gültigen Schlüssel (Kᵢ') Teilschlüssel sind, die exklusiv für die ersten und letzten Iterationen genutzt werden.

5. Ein Prozessor zur Ausführung von einem Chiffrier-Algorithmus zum Implementieren des Verfahrens nach irgendeinem der Ansprüche 1 bis 4, der ein temporäres Register (T) aufweist, mit wenigstens der gleichen Größe wie ein Register (R) zum Speichern von Zwischenergebnissen von dem Algorithmus um die Zwischenergebnisse aufzunehmen von der Iteration mit dem gültigen Schlüssel (Kᵢ) während der Iterationen mit den ungültigen Schlüsseln (Kᵢ').

6. Ein Smart-Karte bzw. Chip-Karte (50), die Mittel aufweist zum Implementieren des Verfahrens nach irgendeinem der Ansprüche 1 bis 4.
